(19) Europäisches Patentamt
European Patent Office
Office européen des brevets

(11) **EP 3 660 091 A1**

(12) **EUROPEAN PATENT APPLICATION**
published in accordance with Art. 153(4) EPC

(43) Date of publication:
**03.06.2020 Bulletin 2020/23**

(51) Int Cl.:
*C08L 23/10* (2006.01)    *C08L 23/02* (2006.01)
*D01F 1/10* (2006.01)    *D01F 6/06* (2006.01)
*D01F 8/06* (2006.01)    *D04H 3/007* (2012.01)
*D04H 3/14* (2012.01)    *D04H 3/147* (2012.01)

(21) Application number: **18837516.6**

(22) Date of filing: **23.07.2018**

(86) International application number:
**PCT/JP2018/027498**

(87) International publication number:
**WO 2019/022004 (31.01.2019 Gazette 2019/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.07.2017 JP 2017142819
27.12.2017 JP 2017252447**

(71) Applicant: **Idemitsu Kosan Co., Ltd
Tokyo 100-8321 (JP)**

(72) Inventors:
• YABE, Mari
Ichihara-shi
Chiba 299-0193 (JP)
• SUGIUCHI, Takumi
Ichihara-shi
Chiba 299-0193 (JP)
• MINAMI, Yutaka
Ichihara-shi
Chiba 299-0193 (JP)
• TAKEBE, Tomoaki
Ichihara-shi
Chiba 299-0193 (JP)

(74) Representative: **Gille Hrabal
Brucknerstrasse 20
40593 Düsseldorf (DE)**

(54) **POLYPROPYLENE-BASED RESIN COMPOSITION, AND FIBER AND NONWOVEN FABRIC USING SAME**

(57)    The present invention relates to [1] a polypropylene-based resin composition satisfying the following requirements (1) and (2) in a differential molecular weight distribution curve which is obtained from measurement by the gel permeation chromatography using polystyrene as a conversion standard, and in which the abscissa represents a logarithmic value log(M) of a molecular weight M, and the ordinate represents a dw/dlog(M) value obtained by differentiating a concentration fraction w by the logarithmic value log(M) of the molecular weight:
(1) In the differential molecular weight distribution curve, a value obtained by integrating the dw/dlog(M) values in the range of $(5.5 \leq \log(M))$ is 25% or less relative to a value obtained by integrating the dw/dlog(M) values over the entire range of log(M); and

(2) In the differential molecular weight distribution curve, a value obtained by integrating the dw/dlog(M) values in the range of $(\log(M) \leq 4.5)$ is more than 10% relative to a value obtained by integrating the dw/dlog(M) values over the entire range of log(M).

The present invention also relates to [2] a polypropylene-based resin composition having a melt flow rate (MFR) of 10 to 500 g/10 min and a half-crystallization time of more than 0.05 seconds; and further relates to [3] a polypropylene-based resin composition containing 40 to 99% by mass of a polypropylene-based resin (A) having a melting point (Tm-D) of higher than 120°C, 0.5 to 59.5% by mass of a polypropylene-based resin (B-1) having a melting endotherm (ΔH-D) of 0 to 80 J/g, and 0.5 to 59.5% by mass of a wax (B-2).

**Description**

TECHNICAL FIELD

The present invention relates to a polypropylene-based resin composition, and a fiber and a nonwoven fabric each using the same.

BACKGROUND ART

Polypropylene-based fibers and nonwoven fabrics have been used in a variety of applications, including disposable diapers, sanitary products, hygienic products, clothing materials, bandages, and packing materials. For example, in PTL 1, it is disclosed that by a spunbonded nonwoven fabric composed of a specified crystalline resin composition having a melt flow rate of 25 to 80 g/10 min and a melting endotherm ΔH of 65 to 100 J/g, a polypropylene-based spunbonded nonwoven fabric having a very small fiber diameter and providing an excellent feel to the touch, or a polypropylene-based spunbonded nonwoven fabric exhibiting high softness is provided.

CITATION LIST

PATENT LITERATURE

PTL 1: WO 2011/030893 A

SUMMARY OF INVENTION

TECHNICAL PROBLEM

In spinning of polypropylene, for the purpose of making a resin pressure in a die high to uniformly extrude the polypropylene from a large number of holes with a small hole diameter, a molten resin is extruded under a high shear condition. The polypropylene exhibits high fluidity in a high shear region and is small in shrinkage of a semi-molten fiber to be caused due to solidification at the time of spinning, so that it exhibits favorable spinnability, and it is known that the polypropylene is effective especially under conditions of low resin temperature, low spinning temperature, multi-hole nozzle, strong-cooling production, and the like.

In addition, in order to more increase the fluidity in a high shear region, it is also known to add a highly crystalline and low-molecular weight polypropylene wax to polypropylene. But, as a result of investigations made by the present inventors, it has been noted that though a resin composition having the aforementioned wax added to polypropylene is improved in the fluidity as compared with polypropylene alone, a crystallization speed of the wax is high, and therefore, a solidification speed increases, the crystallization becomes faster, and the shrinkage of the semi-molten fiber at the time of spinning becomes large, thereby resulting in poor spinning stability.

The present inventors made extensive and intensive investigations. As a result, it has been found that by further adding a specified polypropylene-based resin to the aforementioned resin composition of polypropylene having a wax added thereto, an increase of the solidification speed to be caused due to the aforementioned wax is suppressed while maintaining high fluidity, or by controlling a molecular weight distribution of the resin in the aforementioned resin composition to a fixed range, an influence to be caused due to the addition of the aforementioned wax is minimized, whereby the spinning stability can be improved.

A problem to be solved by the present invention is to provide a polypropylene-based resin composition having excellent fluidity and having satisfactory spinning stability, and a fiber and a nonwoven fabric each using the same.

SOLUTION TO PROBLEM

Disclosures of the present application are as follows.

<1> A polypropylene-based resin composition satisfying the following requirements (1) and (2) in a differential molecular weight distribution curve which is obtained from measurement by the gel permeation chromatography using polystyrene as a conversion standard, and in which the abscissa represents a logarithmic value log(M) of a molecular weight M, and the ordinate represents a dw/dlog(M) value obtained by differentiating a concentration fraction w by the logarithmic value log(M) of the molecular weight:

(1) In the differential molecular weight distribution curve, a value obtained by integrating the dw/dlog(M) values in the range of (5.5 ≤ log(M)) is 25% or less relative to a value obtained by integrating the dw/dlog(M) values over the entire range of log(M); and

(2) In the differential molecular weight distribution curve, a value obtained by integrating the dw/dlog(M) values in the range of (log(M) ≤ 4.5) is more than 10% relative to a value obtained by integrating the dw/dlog(M) values over the entire range of log(M).

<2> The polypropylene-based resin composition as set forth in the above <1>, containing a polypropylene-based resin (A) satisfying the following requirement (3) and a polypropylene-based resin (B) satisfying the following requirement (4) in a differential molecular weight distribution curve which is obtained from measurement by the gel permeation chromatography using polystyrene as a conversion standard, and in which the abscissa represents a logarithmic value log(M) of a molecular weight M, and the ordinate represents a dw/dlog(M) value obtained by differentiating a concentration fraction w by the logarithmic value log(M) of the molecular weight:

(3) In the differential molecular weight distribution curve, a value obtained by integrating the dw/dlog(M) values in the range of (5.5 ≤ log(M)) is 25% or less relative to a value obtained by integrating the dw/dlog(M) values over the entire range of log(M); and

(4) In the differential molecular weight distribution curve, a value obtained by integrating the dw/dlog(M) values in the range of (log(M) ≤ 4.5) is more than 10% relative to a value obtained by integrating the dw/dlog(M) values over the entire range of log(M).

<3> A polypropylene-based resin composition having a melt flow rate (MFR) of 10 g/10 min or more and 500 g/10 min or less and a half-crystallization time of more than 0.05 seconds.

<4> The polypropylene-based resin composition as set forth in the above <2>, containing 40% by mass or more and 99% by mass or less of the polypropylene-based resin (A) and 1% by mass or more and 60% by mass or less of the polypropylene-based resin (B) based on 100% by mass of a sum total of the polypropylene-based resin (A) and the polypropylene-based resin (B).

<5> The polypropylene-based resin composition as set forth in the above <2> or <4>, wherein the polypropylene-based resin (B) contains at least one selected from the group consisting of a wax (B-2) and a polypropylene-based resin (B-1) having a melting endotherm (ΔH-D) of 0 J/g or more and 80 J/g or less.

<6> The polypropylene-based resin composition as set forth in the above <5>, containing 40% by mass or more and 99% by mass or less of the polypropylene-based resin (A), 0.5% by mass or more and 59.5% by mass of the polypropylene-based resin (B-1), and 0.5% by mass or more and 59.5% by mass of the wax (B-2), based on 100% by mass of a sum total of the polypropylene-based resin (A), the polypropylene-based resin (B-1), and the wax (B-2).

<7> The polypropylene-based resin composition as set forth in the above <2> or any one of the above <4> to <6>, wherein a melt flow rate (MFR) of the polypropylene-based resin (A) is 5 g/10 min or more and 100 g/10 min or less.

<8> The polypropylene-based resin composition as set forth in any one of the above <5> to <7>, wherein a molecular weight distribution (Mw/Mn) of at least one selected from the group consisting of the polypropylene-based resin (B-1) and the wax (B-2) is 3.0 or less.

<9> The polypropylene-based resin composition as set forth in any one of the above <5> to <8>, wherein a melt flow rate (MFR) of the polypropylene-based resin (B-1) is 1 g/10 min or more and 5,000 g/10 min or less.

<10> The polypropylene-based resin composition as set forth in any one of the above <5> to <9>, wherein a half-crystallization time of the polypropylene-based resin (B-1) is 3 minutes or more.

<11> A fiber including the polypropylene-based resin composition as set forth in any one of the above <1> to <10>.

<12> The fiber as set forth in the above <11>, including the polypropylene-based resin (A) in a first component and the polypropylene-based resin composition as set forth in any one of the above <1> to <10> in a second component.

<13> The fiber as set forth in the above <12>, wherein a half-crystallization time is more than 0.05 seconds.

<14> A nonwoven fabric including the fiber as set forth in any one of the above <11> to <13>.

<15> A polypropylene-based resin composition containing a polypropylene-based resin (A) having a melting point (Tm-D) of higher than 120°C, a polypropylene-based resin (B-1) having a melting endotherm (ΔH-D) of 0 J/g or more and 80 J/g or less, and a wax (B-2), the polypropylene-based resin composition containing 40% by mass or more and 99% by mass or less of the polypropylene-based resin (A), 0.5% by mass or more and 59.5% by mass of the polypropylene-based resin (B-1), and 0.5% by mass or more and 59.5% by mass of the wax (B-2) based on 100% by mass of a sum total of the polypropylene-based resin (A), the polypropylene-based resin (B-1), and the wax (B-2).

ADVANTAGEOUS EFFECTS OF INVENTION

The polypropylene-based resin composition of the present invention has excellent fluidity and has satisfactory spinning stability, and is able to stably provide a fiber and a nonwoven fabric.

DESCRIPTION OF EMBODIMENTS

The present invention is hereunder described in detail. In this specification, the terminology "A to B" regarding the description of a numerical value means "A or more and B or less" (in the case of A < B), or "A or less and B or more" (in the case of A > B). In addition, in the present invention, a combination of preferred embodiments is more preferred embodiment.

The polypropylene-based resin composition of a first embodiment of the present invention is a polypropylene-based resin composition characterized in that in a differential molecular weight distribution curve which is obtained from measurement by the gel permeation chromatography using polystyrene as a conversion standard, and in which the abscissa represents a logarithmic value $\log(M)$ of a molecular weight M, and the ordinate represents a $dw/d\log(M)$ value obtained by differentiating a concentration fraction w by the logarithmic value $\log(M)$ of the molecular weight, a value obtained by integrating the $dw/d\log(M)$ values in the range of $(5.5 \leq \log(M))$ is 25% or less relative to a value obtained by integrating the $dw/d\log(M)$ values over the entire range of $\log(M)$; and a value obtained by integrating the $dw/d\log(M)$ values in the range of $(\log(M) \leq 4.5)$ is more than 10% relative to a value obtained by integrating the $dw/d\log(M)$ values over the entire range of $\log(M)$.

The value obtained by integrating the $dw/d\log(M)$ values in the range of $(5.5 \leq \log(M))$ of the polypropylene-based resin composition is preferably 20% or less, more preferably 18% or less, still more preferably 14% or less, and especially preferably 10% or less relative to a value obtained by integrating the $dw/d\log(M)$ values over the entire range of $\log(M)$ from the viewpoint of spinnability and uniformity.

Although the reason why in the case where the aforementioned proportion (%) is more than the aforementioned range, the spinnability and the like are lowered is not elucidated yet, it may be considered that entanglement of molecules of the polymer component with each other is strong, so that stretchability at the time of spinning becomes insufficient. Besides, it may be considered that, for example, in the case of spinning a crimped fiber, when the polymer component is in excess, crimping starts just below the nozzle, so that fiber breakage, roping, and so on are liable to be caused.

The value obtained by integrating the $dw/d\log(M)$ values in the range of $(\log(M) \leq 4.5)$ of the polypropylene-based resin composition is preferably 12% or more, more preferably 14% or more, still more preferably 16% or more, and especially preferably 18% or more, and it is preferably 30% or less, and more preferably 25% or less, relative to a value obtained by integrating the $dw/d\log(M)$ values over the entire range of $\log(M)$ from the viewpoint of spinnability, uniformity, and productivity.

In the case where the value obtained by integrating the $dw/d\log(M)$ values in the range of $(\log(M) \leq 4.5)$ is more than the upper limit range, the kneading efficiency of the resin is reduced, or scorch at the time of kneading is caused.

Although the reason why in the case where the value obtained by integrating the $dw/d\log(M)$ values in the range of $(\log(M) \leq 4.5)$ is less than the lower limit range, the spinnability and the like are lowered is not elucidated yet, it may be considered that the entanglement of molecules of the resin with each other cannot be sufficiently reduced, an improvement in fluidity becomes insufficient, and the stretchability at the time of spinning becomes insufficient.

From the viewpoint of spinnability, the $dw/d\log(M)$ value of the polypropylene-based resin composition becomes maximum in the range of preferably $(4.6 \leq \log(M) \leq 5.2)$, more preferably $(4.7 \leq \log(M) \leq 5.1)$, and still more preferably $(4.8 \leq \log(M) \leq 5.0)$.

A GPC device for obtaining the differential molecular weight distribution curve is not particularly limited, and it is possible to utilize a generally commercially available high-temperature type GPC device, for example, a differential refractometer (RI) built-in high-temperature GPC measuring device, "HLC-8200", manufactured by Tosoh Corporation. Specifically, "TOSO GMHHR-H(S)HT", manufactured by Tosoh Corporation is used as a GPC column. The measurement is performed by setting a column temperature to 145°C and using 1,2,4-trichlorobenzene as an eluent at a flow rate of 1.0 mL/min. For preparation of a calibration curve, standard polystyrene, manufactured by Tosoh Corporation is used. A logarithmic value of the thus obtained molecular weight is called a logarithmic molecular weight $(\log(M))$.

As for a time curve (generally called an elution curve) of intensity distribution detected in a differential refractive index (RI) detector of the GPC device, an elution time is expressed in terms of a molecular weight by using a calibration curve obtained from a substance whose molecular weight is already known. Here, since the RI detection intensity is in proportion to the component concentration, an intensity area when the total area of the elution curve is defined as 100% is determined, and a concentration fraction at each elution time is determined. By successively accumulating the concentration fractions and plotting a logarithmic value $(\log(M))$ of molecular weight on the abscissa and the accumulated value of the concentration fractions (w) on the ordinate, respectively, an integral molecular weight distribution curve can be obtained.

Subsequently, by determining a differential value of the curve in the logarithmic value of each molecular weight (namely, a gradient of integral molecular weight curve) and plotting a logarithmic value (log(M)) of molecular weight on the abscissa and the aforementioned differential value (dw/dlog(M)) on the ordinate, respectively, a differential molecular weight distribution curve can be obtained. In consequence, the differential molecular weight distribution means a value obtained by differentiating the concentration fraction (w) by the logarithmic value (log(M)) of molecular weight, namely "dw/dlog(M)". From this integral molecular weight distribution curve, the integral molecular weight distribution dw/dlog(M) at a specified log(M) can be read.

With respect to the polypropylene-based resin composition having a plurality of polypropylene-based resins blended therein, the integral molecular weight distribution curve can be obtained by the same technique after measuring the polypropylene-based resin composition by the GPC method.

The polypropylene-based resin composition of a second embodiment of the present invention is one in which not only a melt flow rate (MFR) is 10 g/10 min or more and 500 g/10 min or less, but also a half-crystallization time is more than 0.05 seconds.

From the viewpoint of spinning stability of the fiber, the MFR of the polypropylene-based resin composition of the second embodiment of the present invention is 10 g/10 min or more, preferably 20 g/10 min or more, more preferably 30 g/10 min or more, still more preferably 40 g/10 min or more, and yet still more preferably 50 g/10 min or more, and it is 500 g/10 min or less, preferably 200 g/10 min or less, more preferably 150 g/10 min or less, and still more preferably 100 g/10 min or less.

The MFR of the polypropylene-based resin composition is measured under a condition at a temperature of 230°C and a load of 21.18 N in conformity with ISO 1133:1997.

From the viewpoint of spinning stability of the fiber, the half-crystallization time at 25°C of the polypropylene-based resin composition of the second embodiment of the present invention is more than 0.05 seconds. When the half-crystallization time is 0.05 seconds or less, the spinning stability of the fiber is poor.

From such a viewpoint, the half-crystallization time at 25°C of the polypropylene-based resin composition is preferably 0.06 seconds or more, more preferably 0.07 seconds or more, and still more preferably 0.08 seconds or more.

The half-crystallization time of the polypropylene-based resin composition can be obtained in a manner in which using FLASH DSC (manufactured by Mettler-Toledo K.K.), a sample is heated and melted at 230°C for 2 minutes and then cooled to a predetermined temperature (25°C in the present invention) at a rate of 2,000°C/sec, thereby measuring a change in calorific value with time in an isothermal crystallization process at a prescribed temperature (25°C in the present invention). When an integrated value of the calorific value from the start of isothermal crystallization until the completion of crystallization is defined as 100%, a time from the start of isothermal crystallization until the integrated value of the calorific value becomes 50% is defined as the half-crystallization time.

The polypropylene-based resin composition of a third embodiment of the present invention is a polypropylene-based resin composition containing 40% by mass or more and 99% by mass or less of a polypropylene-based resin (A) having a melting point (Tm-D) of higher than 120°C, 0.5% by mass or more and 59.5% by mass of a polypropylene-based resin (B-1) having a melting endotherm ($\Delta$H-D) of 0 J/g or more and 80 J/g or less, and 0.5% by mass or more and 59.5% by mass of a wax (B-2).

When the polypropylene-based resin composition of the third embodiment of the present invention contains predetermined amounts of the polypropylene-based resin (B) and the wax (B-2), favorable fluidity and spinning stability can be achieved. As mentioned above, though a resin composition having a wax added to polypropylene is improved in fluidity as compared with polypropylene alone, it is poor in spinning stability because the solidification speed is increased due to a wax. In contrast, in view of the fact that the resin composition of the present invention further contains the polypropylene-based resin (B) with low crystallinity in addition to the wax (B-2), by delaying the crystallization speed of the resin composition due to the polypropylene-based resin (B) while maintaining the effect for improving the fluidity of the resin composition due to the wax (B-2), the resin composition of the present invention is also excellent in spinning stability.

From the viewpoint of spinning stability, the content of the polypropylene-based resin (A) is preferably 50% by mass or more, more preferably 60% by mass or more, still more preferably 70% by mass or more, and yet still more preferably 80% by mass or more, and it is preferably 98% by mass or less, and more preferably 95% by mass or less, based on 100% by mass of a total amount of the above (A), (B-1), and (B-2).

From the viewpoint of spinning stability, the content of the polypropylene-based resin (B-1) is preferably 5% by mass or more, more preferably 15% by mass or more, and still more preferably 35% by mass or more, and it is preferably 55% by mass or less, more preferably 50% by mass or less, and still more preferably 45% by mass or less, based on 100% by mass of a total amount of the above (A), (B-1), and (B-2).

From the viewpoint of spinning stability, the content of the wax (B-2) is preferably 5% by mass or more, more preferably 15% by mass or more, and still more preferably 35% by mass or more, and it is preferably 55% by mass or less, more preferably 50% by mass or less, and still more preferably 45% by mass or less, based on 100% by mass of a total amount of the above (A), (B-1), and (B-2).

[Polypropylene-based Resin (A)]

As for the polypropylene-based resin (A) which is used in an embodiment of the present invention, in the differential molecular weight distribution curve, the value obtained by integrating the dw/dlog(M) values in the range of $(5.5 \leq \log(M))$ is 25% or less, more preferably 20% or less, still more preferably 18% or less, yet still more preferably 14% or less, and especially preferably 10% or less relative to a value obtained by integrating the dw/dlog(M) values over the entire range of log(M) from the viewpoint of spinnability.

The dw/dlog(M) value of the polypropylene-based resin (A) becomes maximum in the range of preferably $(5.1 \leq \log(M) \leq 5.5)$, more preferably $(5.1 \leq \log(M) \leq 5.3)$, and still more preferably $(5.1 \leq \log(M) \leq 5.2)$.

The aforementioned values can be measured in the same method as the method for determining those of the polypropylene-based resin composition.

The polypropylene-based resin (A) which is used in the present invention is preferably one having a melting point (Tm-D) of higher than 120°C. Here, the melting point (Tm-D) is defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC).

From the viewpoint of spinning stability of the fiber, the melting point (Tm-D) of the polypropylene-based resin (A) is higher than 120°C, preferably 125°C or higher, and more preferably 140°C or higher, and it is preferably 180°C or lower, and more preferably 170°C or lower.

A melting endotherm ($\Delta$H-D) of the polypropylene-based resin (A) is preferably more than 80 J/g, and more preferably 85 J/g or more, and it is preferably 120 J/g or less, and more preferably 110 J/g or less. Here, the melting endotherm ($\Delta$H-D) is calculated by determining an area surrounded by a line containing a peak of a melting endothermic curve obtained by holding a sample under a nitrogen atmosphere at -10°C for 5 minutes and then increasing the temperature at a rate of 10°C/min by using a differential scanning calorimeter (DSC) and a line connecting a point on the low-temperature side free from a change of the amount of heat with a point on the high-temperature side free from a change of the amount of heat (this line is referred to as a baseline).

From the viewpoint of spinning ability of the fiber, a melt flow rate (MFR) of the polypropylene-based resin (A) is preferably 5 g/10 min or more, more preferably 7 g/10 min or more, still more preferably 10 g/10 min or more, yet still more preferably 15 g/10 min or more, and especially preferably 20 g/10 min or more, and it is preferably 100 g/10 min or less, more preferably 90 g/10 min or less, and still more preferably 80 g/10 min or less. In the present invention, the MFR of the polypropylene-based resin (A) is measured under a condition at a temperature of 230°C and a load of 21.18 N in conformity with ISO 1133:1997.

From the viewpoint of spinning ability of the fiber, a weight average molecular weight (Mw) of the polypropylene-based resin (A) is preferably 30,000 or more, and it is preferably 600,000 or less, and more preferably 300,000.

A molecular weight distribution (Mw/Mn) of the polypropylene-based resin (A) is preferably 3.0 or less, and more preferably 2.5 or less. When the molecular weight distribution of the polypropylene-based resin (A) falls within the aforementioned range, the generation of stickiness in the fiber obtained by spinning is suppressed.

The aforementioned weight average molecular weight (Mw) and the molecular weight distribution (Mw/Mn) are determined by means of a gel permeation chromatography (GPC) measurement. The weight average molecular weight is a weight average molecular weight expressed in terms of polystyrene, as measured by using the following device under the following condition, and the molecular weight distribution is a value calculated from a number average molecular weight (Mn) as measured similarly and the aforementioned weight average molecular weight.

<GPC Measuring Device>

Column: "TOSO GMHHR-H(S)HT", manufactured by Tosoh Corporation
Detector: RI detector for liquid chromatogram, "WATERS 150C", manufactured by Waters Corporation

<Measurement Condition>

Solvent: 1,2,4-Trichlorobezene
Measurement temperature: 145°C
Flow rate: 1.0 mL/min
Sample concentration: 2.2 mg/mL
Injection amount: 160 $\mu$L

Calibration curve: Universal Calibration
Analysis program: HT-GPC (Ver. 1.0)

From the viewpoint of spinning stability of the fiber, a half-crystallization time at 25°C of the polypropylene-based resin (A) is preferably more than 0.01 seconds, and it is preferably 0.06 seconds or less.

The half-crystallization time of the polypropylene-based resin (A) can be obtained in a manner in which using FLASH DSC (manufactured by Mettler-Toledo K.K.), a sample is heated and melted at 230°C for 2 minutes and then cooled to a predetermined temperature (25°C in the present invention) at a rate of 2,000°C/sec, thereby measuring a change in calorific value with time in an isothermal crystallization process at a prescribed temperature (25°C in the present invention).

As commercially available products of the polypropylene-based resin (A), "NOVATEC™ PP" Series (for example, "NOVATEC SA03") (manufactured by Japan Polypropylene Corporation), "ExxonMobil™ Polypropylene" Series (for example, "PP3155") (manufactured by ExxonMobil Chemical Corporation), "Prime Polypro™" Series (form example, "Y2000GP") (manufactured by Prime Polymer Co., Ltd.), and so on can be used.

From the viewpoint of spinning stability of the fiber, the content of the polypropylene-based resin (A) in the resin composition of the present invention is preferably 50% by mass or more, more preferably 60% by mass or more, still more preferably 70% by mass or more, and yet still more preferably 80% by mass or more, and it is preferably 98% by mass or less, and more preferably 95% by mass or less, based on 100% by mass of a total amount of the above (A) and (B).

[Polypropylene-based Resin (B)]

As for the polypropylene-based resin (B) which is used in an embodiment of the present invention, in the differential molecular weight distribution curve, the value obtained by integrating the dw/dlog(M) values in the range of ($\log(M) \leq 4.5$) is more than 10%, more preferably 15% or more, still more preferably 20% or more, yet still more preferably 25% or more, and especially preferably 30% or more relative to a value obtained by integrating the dw/dlog(M) values over the entire range of log(M) from the viewpoint of spinnability.

The dw/dlog(M) value of the polypropylene-based resin (B) becomes maximum in the range of preferably ($4.2 \leq \log(M) \leq 5.2$), and more preferably ($4.5 \leq \log(M) \leq 4.9$).

The aforementioned values can be measured in the same method as the method for determining those of the polypropylene-based resin composition.

Although the polypropylene-based resin (B) is not particularly limited so long as it satisfies the aforementioned requirements, from the viewpoint of compatibility with the polypropylene-based resin (A) and the viewpoint of improvement in spinnability, it is preferred to contain at least one selected from the group consisting of a polypropylene-based resin (B-1) and a wax (B-2) as mentioned later, and it is more preferred to contain both of them.

A molecular weight distribution (Mw/Mn) of at least one selected from the group consisting of the polypropylene-based resin (B-1) and the wax (B-2) is preferably 5.0 or less, more preferably 4.0 or less, still more preferably 3.0 or less, and yet still more preferably 2.5 or less. When the molecular weight distribution falls within the aforementioned range, the generation of stickiness in the fiber obtained by spinning is suppressed.

The molecular weight distribution (Mw/Mn) is determined by means of a gel permeation chromatography (GPC) measurement. The weight average molecular weight is a weight average molecular weight expressed in terms of polystyrene, as measured by using the following device under the following condition, and the molecular weight distribution is a value calculated from a number average molecular weight (Mn) as measured similarly and the aforementioned weight average molecular weight.

<GPC Measuring Device>

Column: "TOSO GMHHR-H(S)HT", manufactured by Tosoh Corporation
Detector: RI detector for liquid chromatogram, "WATERS 150C", manufactured by Waters Corporation

<Measurement Condition>

Solvent: 1,2,4-Trichlorobezene
Measurement temperature: 145°C
Flow rate: 1.0 mL/min

Sample concentration: 2.2 mg/mL
Injection amount: 160 μL
Calibration curve: Universal Calibration
Analysis program: HT-GPC (Ver. 1.0)

From the viewpoint of spinning stability of the fiber, the content of the polypropylene-based resin (B) is preferably 5% by mass or more, more preferably 15% by mass or more, and still more preferably 35% by mass or more, and it is preferably 55% by mass or less, more preferably 50% by mass or less, and still more preferably 45% by mass or less, based on 100% by mass of a total amount of the above (A) and (B).

[Propylene-based Resin (B-1)]

The polypropylene-based resin (B-1) which is used in the present invention is preferably one having a melting endotherm (ΔH-D) of 0 J/g or more and 80 J/g or less. Here, the melting endotherm (ΔH-D) is calculated by determining an area surrounded by a line containing a peak of a melting endothermic curve obtained by holding a sample under a nitrogen atmosphere at -10°C for 5 minutes and then increasing the temperature at a rate of 10°C/min by using a differential scanning calorimeter (DSC) and a line connecting a point on the low-temperature side free from a change of the amount of heat with a point on the high-temperature side free from a change of the amount of heat (this line is referred to as a baseline).

From the viewpoint of spinning stability of the fiber, the melting endotherm (ΔH-D) of the polypropylene-based resin (B-1) is more preferably 10 J/g or more, still more preferably 20 J/g or more, and yet still more preferably 30 J/g or, and it is preferably 70 J/g or less, more preferably 60 J/g or less, and still more preferably 50 J/g or less.

The polypropylene-based resin (B-1) may be a propylene homopolymer or may also be a copolymer. In the case of a copolymer, a copolymerization ratio of a propylene unit is more than 50 mol%, preferably 60 mol% or more, more preferably 70 mol% or more, still more preferably 90 mol% or more, and even yet still more preferably 95 mol% or more. A copolymerizable monomer is at least one selected from the group consisting of ethylene and an α-olefin having 4 to 30 carbon atoms, and specific examples thereof include ethylene, 1-butene, 1-pentene, 1-hexene, 1-octene, and 1-decene.

In the case where the polypropylene -based resin (B-1) is a copolymer, the polypropylene-based resin (B-1) preferably contains at least one structural unit selected from the group consisting of ethylene and an α-olefin having 4 to 30 carbon atoms in an amount of more than 0 mol% and 20 mol% or less.

From the viewpoint of spinning stability of the fiber, a melt flow rate (MFR) of the polypropylene-based resin (B-1) is preferably 5 g/10 min or more, more preferably 10 g/10 min or more, and still more preferably 20 g/10 min or more, and it is preferably 5,000 g/10 min or less, more preferably 4,000 g/10 min or less, and still more preferably 3,000 g/10 min or less. Similar to the measurement method of MFR of the polypropylene-based resin (A), the MFR of the polypropylene-based resin (B-1) is measured under a condition at a temperature of 230°C and a load of 21.18 N in conformity with ISO 1133:1997.

From the viewpoint of slow crystallization speed, the half-crystallization time at 25°C of the polypropylene-based resin (B-1) is 3 minutes or more, or a crystallization peak measured by the differential scanning calorimeter (DSC) is not observed. The half-crystallization time is preferably 10 minutes or more, and more preferably 30 minutes or more. When the half-crystallization speed is slow such that the half-crystallization time is more than 60 minutes, there is a case where a definite crystallization peak is not observed.

As to the measurement method of the half-crystallization time of the polypropylene-based resin (B-1), similar to the measurement method of the half-crystallization time of the aforementioned resin composition or polypropylene-based resin (A), the half-crystallization time half-crystallization time of the polypropylene-based resin (A) can be obtained in a manner in which using FLASH DSC (manufactured by Mettler-Toledo K.K.), a sample is heated and melted at 230°C for 2 minutes and then cooled to a predetermined temperature (25°C in the present invention) at a rate of 2,000°C/sec, thereby measuring a change in calorific value with time in an isothermal crystallization process at a prescribed temperature (25°C in the present invention).

The half-crystallization time of the polypropylene-based resin (B-1) may also be measured with a differential scanning calorimeter (DSC) (a product name: "DSC-7", manufactured by PerkinElmer Inc.) in the following method.

(1) A change in calorific value with time in an isothermal crystallization process is obtained by holding 10 mg of a sample at 25°C for 5 minutes, increasing the temperature to 220°C at a rate of 320°C/sec, holding for 5 minutes, cooling to 25°C at a rate of 320°C/sec, and then holding for 60 minutes.
(2) When an integrated value of the calorific value from the start of isothermal crystallization until the completion of crystallization is defined as 100%, a time from the start of isothermal crystallization until the integrated value of the calorific value becomes 50% is defined as the half-crystallization time.

It is preferred that the polypropylene-based resin (B-1) satisfies at least one of the following requirements (1) to (3). Adjustment for satisfying these requirements can be conducted by selection of a catalyst and reaction conditions in producing the polypropylene-based resin (B-1)

(1) The weight average molecular weight (Mw) is 30,000 or more and 200,000 or less.
(2) The molecular weight distribution (Mw/Mn) is 3.0 or less.
(3) The melting point (Tm-D) as measured by the differential scanning calorimeter (DSC) is 0°C or higher and 120°C or lower.

(1) Weight Average Molecular Weight (Mw)

From the viewpoint of spinning stability of the fiber, the weight average molecular weight (Mw) of the polypropylene-based resin (B-1) is preferably 30,000 or more, and it is preferably 600,000.

(2) Molecular Weight Distribution (Mw/Mn)

The molecular weight distribution (Mw/Mn) of the polypropylene-based resin (B-1) is preferably 3.0 or less, more preferably 2.5 or less, and still more preferably 2.3 or less. When the molecular weight distribution of the polypropylene-based resin (B-1) falls within the aforementioned range, the generation of stickiness in the fiber obtained by spinning is suppressed.

The aforementioned weight average molecular weight (Mw) and the molecular weight distribution (Mw/Mn) are determined by means of a gel permeation chromatography (GPC) measurement. The weight average molecular weight is a weight average molecular weight expressed in terms of polystyrene, as measured by using the following device under the following condition, and the molecular weight distribution is a value calculated from a number average molecular weight (Mn) as measured similarly and the aforementioned weight average molecular weight.

<GPC Measuring Device>

Column: "TOSO GMHHR-H(S)HT", manufactured by Tosoh Corporation
Detector: RI detector for liquid chromatogram, "WATERS 150C", manufactured by Waters Corporation

<Measurement Condition>

Solvent: 1,2,4-Trichlorobezene
Measurement temperature: 145°C
Flow rate: 1.0 mL/min
Sample concentration: 2.2 mg/mL
Injection amount: 160 $\mu$L
Calibration curve: Universal Calibration
Analysis program: HT-GPC (Ver. 1.0)

(3) Melting Point (Tm-D)

From the viewpoint of spinning stability of the fiber, the melting point (Tm-D) of the polypropylene-based resin (B-1) is preferably 0°C or more, more preferably 30°C or higher, and still more preferably 60°C or higher, and it is preferably 120°C or lower, and more preferably 100°C or lower.

The measurement method of the melting point (Tm-D) of the polypropylene-based resin (B-1) is the same as the measurement method of the melting point (Tm-D) of the polypropylene-based resin (A). That is, the melting point (Tm-D) of the polypropylene-based resin (B-1) in the present invention is defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC).

As the polypropylene-based resin (B-1), commercially available products can be used. Specific examples thereof include "S400", "S600", and "S901" of "L-MODU" (registered trademark) (manufactured by Idemitsu Kosan Co., Ltd.). Examples of commercially available products of an amorphous poly-$\alpha$-olefin include "APAO", manufactured by REXtac, LLC; and "Verstoplast", manufactured by Evonik Industries AG (all of which are a product name). Examples of commercially available products of a propylene-based elastomer include "TAFMER XM", "TAFMER PN", and "TAFMER SN", all of which are manufactured by Mitsui Chemicals, Inc.; "TAFTHREN", manufactured by Sumitomo Chemical Co., Ltd.; "Prime TPO", manufactured by Prime Polymer Co., Ltd.; "Versify", manufactured by The Dow Chemical Company; "Vistamaxx" and "Linxar", all of which are manufactured by ExxonMobil Chemical Corporation; "Licocene", manufactured by Clariant AG; and "Adflex", manufactured by Basell (all of which are a product name).

From the viewpoint of spinning stability of the fiber, the content of the polypropylene-based resin (B-1) in the resin composition of the present invention is preferably 5% by mass or more, more preferably 15% by mass or more, and still more preferably 35% by mass or more, and it is preferably 55% by mass or less, more preferably 50% by mass or less, and still more preferably 45% by mass or less, based on 100% by mass of a total amount of the above (A), (B-1), and (B-2).

[Wax (B-2)]

From the viewpoint of fluidity of the resin composition, the polypropylene-based resin composition of the present invention contains a wax (B-2). The "wax" in the present invention is a general term of a substance which is a solid at an ordinal temperature (23°C) and when heated, is liquefied to become oily, and includes not only an ester between a higher alcohol and a higher fatty acid (acid in a narrow sense) but also a polyolefin with high fluidity, a peroxide-containing polypropylene, etc.

The kind of the wax (B-2) which is used in the present invention is not particularly limited, and examples thereof include an animal wax, a vegetable wax, a carnauba wax, a candelilla wax, a Japan wax, a beeswax, a mineral wax, a petroleum wax, a paraffin wax, a microcrystalline wax, a petrolatum, a polyolefin-based wax, a higher fatty acid wax, a high fatty acid ester wax, and a Fischer-Tropsch wax.

Examples of the polyolefin-based wax include a poly-$\alpha$-olefin-based wax. Examples of the poly-$\alpha$-olefin-based wax include a polypropylene-based wax. Examples of the polypropylene-based wax include a polypropylene wax and an oxidized polypropylene wax. In the present invention, the polyolefin with high fluidity and the peroxide-containing polypropylene are also included in the concept of the polyolefin-based wax, and preferred examples thereof include polyethylene with high fluidity and polypropylene with high fluidity. Examples of commercially available products of the polyolefin with high fluidity include "Hi-WAX™", manufactured by Mitsui Chemicals, Inc., and "VISCOL", manufactured by Sanyo Chemical Industries, Ltd. Examples of commercially available products of the peroxide-containing polypropylene include "Moplen HP461Y", manufactured by LyondellBasell Industries N.V. Besides, a wax produced by using a metallocene-based catalyst is preferred from the viewpoint of controlling the molecular weight distribution. Examples of commercially available products thereof include "MF650Y", manufactured by LyondellBasell Industries N.V.

From the viewpoint of compatibility with the polypropylene-based resin (A) and the polypropylene-based resin (B-1), the wax (B-2) which is used in the present invention is preferably a polyolefin-based wax, more preferably a poly-$\alpha$-olefin-based wax, and still more preferably a polypropylene-based wax.

From the viewpoint of fluidity of the resin composition, a melting point of the wax (B-2) is preferably 120°C or higher, and more preferably 130°C or higher. It is preferably 180°C or lower, more preferably 170°C or lower, and still more preferably 160°C or lower.

The measurement method of the melting point (Tm-D) of the wax (B-2) is the same as the measurement method of the melting point (Tm-D) of the polypropylene-based resin (A). That is, the melting point (Tm-D) of the wax (B-2) in the present invention is defined as a peak top of a peak observed on the highest temperature side of a melting endothermic curve obtained by holding under a nitrogen atmosphere at -10°C for 5 minutes and then increasing the temperature at a rate of 10°C/min by using a differential scanning calorimeter (DSC).

In the case where the wax (B-2) is a polyolefin-based wax (in particular, a polyolefin with high fluidity or a peroxide-containing polypropylene), from the viewpoint of fluidity of the resin composition, a melt flow rate (MFR) of the wax (B-2) is preferably 500 g/10 min or more, and more preferably 1,000 g/10 min or more. As for the measurement method of the MFR of the wax (B-2), the measurement is performed under a condition a load of 21.18 N in conformity with ISO 1133:1997. In the case where the wax (B-2) is polypropylene, its measurement temperature is 230°C.

The molecular weight distribution (Mw/Mn) of the wax (B-2) is preferably 7.0 or less, and more preferably 5.0 or less. When the molecular weight distribution of the wax (B-2) falls within the aforementioned range, the generation of stickiness in the fiber obtained by spinning is suppressed. Above of all, the wax produced by using a metallocene-based catalyst is preferred from the viewpoint of controlling the molecular weight distribution.

The molecular weight distribution (Mw/Mn) is determined by means of a gel permeation chromatography (GPC) measurement. The weight average molecular weight is a weight average molecular weight expressed in terms of polystyrene, as measured by using the following device under the following condition, and the molecular weight distribution is a value calculated from a number average molecular weight (Mn) as measured similarly and the aforementioned weight average molecular weight.

<GPC Measuring Device>

Column: "TOSO GMHHR-H(S)HT", manufactured by Tosoh Corporation
Detector: RI detector for liquid chromatogram, "WATERS 150C", manufactured by Waters Corporation

<Measurement Condition>

Solvent: 1,2,4-Trichlorobezene
Measurement temperature: 145°C
Flow rate: 1.0 mL/min
Sample concentration: 2.2 mg/mL
Injection amount: 160 $\mu$L
Calibration curve: Universal Calibration
Analysis program: HT-GPC (Ver. 1.0)

The content of the wax (B-2) in the resin composition of the present invention is preferably 5% by mass or more, more preferably 15% by mass or more, and still more preferably 35% by mass or more, and it is preferably 55% by mass or less, more preferably 50% by mass or less, and still more preferably 45% by mass or less, based on 100% by mass of a total amount of the above (A), (B-1), and (B-2).

(Additive)

The resin composition of the present invention can be blended with an arbitrary additive within a range where the effects of the present invention are not impaired. Specific examples of the additive include a foaming agent, a crystal nucleating agent, a weatherability stabilizer, a UV absorber, a light stabilizer, a heat resistance stabilizer, an antistatic agent, a release agent, a flame retardant, a synthetic oil, an electric property-improving agent, a slip inhibitor, an anti-blocking agent, a viscosity-controlling agent, a coloring inhibitor, a defogging agent, a lubricant, a pigment, a dye, a plasticizer, a softening agent, an age resistor, a hydrochloric acid-absorbing agent, a chlorine scavenger, an antioxidant, and an antitack agent.

[Fiber and Nonwoven Fabric]

The fiber of the present invention includes the aforementioned resin composition of the present invention. From the viewpoint of improvement in spinnability, the content of the resin composition of the present invention in the fiber of the present invention is preferably 10% by mass or more, more preferably 30% by mass or more, still more preferably 50% by mass or more, yet still more preferably 70% by mass or more, especially preferably 90% by mass or more, and most preferably 100% by mass based on 100% by mass of the fiber of the present invention.
The nonwoven fabric of the present invention includes the aforementioned resin composition of the present invention. From the viewpoint of improvement in spinnability, the content of the resin composition of the present invention in the nonwoven fabric of the present invention is preferably 10% by mass or more, more preferably 30% by mass or more, still more preferably 50% by mass or more, yet still more preferably 70% by mass or more, especially preferably 90% by mass or more, and most preferably 100% by mass based on 100% by mass of the nonwoven fabric of the present invention.
The polypropylene-based resin composition of the present invention is able to suppress shrinkage of the fiber in a semi-molten state at the time of spinning, has excellent fluidity and satisfactory spinning stability, and is able to stably provide a fiber and a nonwoven fabric. For that reason, the polypropylene-based resin composition of the present invention effectively exhibits favorable spinnability especially under conditions of low resin temperature, low spinning temperature, strong-cooling production under high-production conditions with multi-hole nozzles, and the like.
The fiber of the present invention may be a side-by-side type fiber or may be a core-sheath type fiber, each of which is composed of a first component and a second component. In addition, the fiber of the present invention may be a side-by-side type crimped fiber or may be a core-sheath type crimped fiber, each of which is composed of a first component and a second component.
Although a ratio of the first component to the second component is not particularly limited, the ratio of (first component)/(second component) may be 1/9 to 9/1, may be 2/8 to 8/2, may be 3/7 to 7/3, may be 4/6 to 6/4, or may be 5/5.

The polypropylene-based resin composition of the present invention, the polypropylene-based resin (A), the polypropylene-based resin (B-1), and the wax (B-2) may be incorporated into the respective components, may be incorporated into only the first component, may be incorporated into only the second component, or may be incorporated into both of them.

In particular, in the case of producing a crimped fiber, it is preferred that the polypropylene-based resin (A) is contained in the first component, and the polypropylene-based resin composition of the present invention is contained in the second component.

A half-crystallization time of the first component is preferably more than 0.05 seconds, more preferably 0.06 seconds or more, still more preferably 0.07 seconds or more, and yet still more preferably 0.08 seconds or more.

It is preferred that values obtained by integrating the dw/dlog(M) values in the range of $(5.5 \leq \log(M))$ of the first component and the second component are close to each other as far as possible from the viewpoint of uniformity and spinnability on producing a nonwoven fabric.

An example of a production method of a side-by-side type fiber is shown below.

The side-by-side type fiber is produced by the melt spinning method in which the resin materials of at least two components are each separately melt extruded with an extruder and extruded from special spinning nozzles as disclosed in, for example, U.S. Patent 3,671,379, and the molten resins each separately melt extruded from the extruder are joined and discharged in a fiber form, followed by cooling for solidification. Here, in the aforementioned process, as the spinning speed is fast, the crimping properties of the resulting side-by-side type crimped fiber can be enhanced, and hence, such is preferred. If desired, a post-treatment step, such as heating or stretching after spinning may be adopted, and for example, a crimping degree of the fiber may be increased by heating at 100 to 150°C, stretching in a ratio of 1.2 to 5 times, or a combined condition thereof.

Suppression of shrinkage of the fiber in a semi-molten state at the time of spinning by the resin composition of the present invention is excellent in production of the crimped fiber due to a difference in shrinkage of the resins, and therefore, it is expected that not only the side-by-side type fiber but also a yarn with excellent crimping properties upon application to eccentric nozzles is obtained.

The number of crimps of the thus obtained crimped fiber is preferably 10 or more per 25 mm, more preferably 15 or more per 25 mm, still more preferably 20 or more per 25 mm, and yet still more preferably 25 or more per 25 mm from the viewpoint of bulkiness, flexibility, and hand touch of the nonwoven fabric containing the foregoing fiber.

From the viewpoint of a balance among texture of the nonwoven fabric, flexibility, and strength, a fineness of the fiber constituting the nonwoven fabric of the present invention is preferably 0.5 deniers or more, and more preferably 0.7 deniers or more, and it is preferably 2.5 denies or less, more preferably 2.0 deniers or less, and still more preferably 1.7 deniers or less. The fineness of the fiber is calculated by the following measurement method.

[Measurement of Fineness]

Fibers in a nonwoven fabric are observed with a polarizing microscope, an average value d (unit: m) of diameter of randomly selected 100 fibers is measured, and the fineness of the nonwoven fabric sample is calculated from a density of the resin ($p = 900,000$ g/m$^3$) according to the following expression.

$$\text{Fineness (denier)} = \rho \times \pi \times (d/2)^2 \times 9,000$$

The production method of the nonwoven fabric of the present embodiment is not particularly limited, and a conventionally known method can be adopted. As an example thereof, the spunbonding method is shown below.

Generally, in the spunbonding method, a melt-kneaded resin composition is spun, stretched, and then opened to form a continuous long fiber, and subsequently, in the continuing step, the continuous long fiber is deposited on a moving collector surface and entangled to produce a nonwoven fabric. According to the foregoing method, the nonwoven fabric can be continuously produced, and the fibers constituting the nonwoven fabric are a stretched continuous long fiber, and therefore, the strength is high. As for the spunbonding method, a conventionally known method can be adopted, and the fibers can be produced by extruding a molten polymer from, for example, a group of large nozzle having several thousand holes, or for example, a group of small nozzles each having about 40 holes. After being ejected from the nozzle, the molten fiber is cooled by a cross-flow cold air system and then drawn away from the nozzle, followed by stretching by high-speed airflow. Generally, there are two kinds of air-damping methods, both of which use a venturi effect. In the first method, a filament is stretched using a suction slot (slot stretching), and this method is conducted with a width of the nozzle or a width of the machine. In the second method, a filament is stretched through a nozzle or a suction gun. A filament formed by this method is collected on a screen (wire) or a pore forming belt to form a web. Subsequently, the web passes through compression rolls and then between heating calendar rolls and are bounded at a part where the embossing part on one roll includes about 10% or more and about 40% or less of the area of the web to form a nonwoven fabric.

As for the reason why the resin composition of the present invention has excellent fluidity and has satisfactory spinning stability, the present inventors conjecture as follows.

In the spunbonding method, the molecular chains of the resin in an entangled state are stretched due to shear on the die wall surface at the time of discharge. According to this, the molecular chains of the resin which after being discharged from the die, have been stretched try to get back to cause thread breakage, thereby resulting in poor spinning stability. In addition, in the case of a resin composition having a highly crystalline low-molecular weight polypropylene wax added to a conventional polypropylene, since the crystallization speed of the wax is high, the solidification speed of the resin composition increases to hasten the crystallization, and shrinkage of the semi-molten fiber at the time of spinning becomes large. For that reason, the stretched resin tries to get back to cause fiber breakage, thereby resulting in poor spinning stability.

In contrast, in the polypropylene-based resin composition of an embodiment of the present invention, by containing a predetermined amount of the polypropylene-based resin (B-1) having a relatively low crystallization speed, and in another embodiment, by controlling the molecular weight distribution of the resin in the resin composition to a fixed range, the shrinkage of the semi-molten fiber at the time of spinning can be suppressed. In addition, in the polypropylene-based resin composition of an embodiment of the present invention, since it contains predetermined amounts of the polypropylene-based resin (B-1) and the wax (B-2), the shear on the die wall surface at the time of discharge is suppressed, too. In consequence, in the polypropylene-based resin composition of an embodiment of the present invention, not only the shear on the die wall surface at the time of discharge is suppressed owing to the polypropylene-based resin (B-1) and the wax (B-2), but also the shrinkage of the semi-molten fiber at the time of spinning is suppressed owing to the polypropylene-based resin (B-1), and therefore, the increase of the solidification speed owing to the wax is suppressed while maintaining high fluidity, and the spinning stability can be improved.

[Multilayered Nonwoven Fabric]

The nonwoven fabric of the present invention may also be a multilayered nonwoven fabric including a laminate of two or more layers. In that case, from the viewpoint of smoothness of the surface, it is preferred that at least one layer of the nonwoven fabric constituting an outer layer of the multilayered nonwoven fabric is the nonwoven fabric of the present invention.

[Fiber Product]

Although the fiber product using the nonwoven fabric of the present invention is not particularly limited, for example, the following fiber products can be exemplified. That is, examples thereof include a member for a disposable diaper, a stretchable member for a diaper cover, a stretchable member for a sanitary product, a stretchable member for a hygienic product, a stretchable tape, an adhesive bandage, a stretchable member for clothing, an insulating material for clothing, a heat insulating material for clothing, a protective suit, a hat, a mask, a glove, a supporter, a stretchable bandage, a base fabric for a fomentation, a non-slip base fabric, a vibration absorber, a finger cot, an air filter for a clean room, an electret filter subjected to electret processing, a separator, a heat insulator, a coffee bag, a food packaging material, a ceiling skin material for an automobile, an acoustic insulating material, a cushioning material, a speaker dust-proof material, an air cleaner material, an insulator skin, a backing material, an adhesive nonwoven fabric sheet, various members for automobiles, such as a door trim, various cleaning materials, such as a cleaning material for a copying machine, the facing and backing of a carpet, an agricultural beaming, a timber drain, members for shoes, such as a sport shoe skin, a member for a bag, an industrial sealing material, a wiping material, and a sheet.

EXAMPLES

Next, the present invention is specifically described by reference to Examples, but it should be construed that the present invention is by no means limited by these Examples.

[DSC Measurement]

A melting endotherm (ΔH-D) was determined from a melting endothermic curve obtained by holding 10 mg of a sample at -10°C for 5 minutes under a nitrogen atmosphere and then increasing the temperature at a rate of 10°C/min by using a differential scanning calorimeter (DSC-7, manufactured PerkinElmer Inc.). In addition, a melting point (Tm-D) was determined from a peak top of a peak observed on the highest temperature side of the obtained melting endothermic curve.

The melting endotherm (ΔH-D) is calculated in a manner in which when a line connecting a point on the low-temperature side free from a change of the amount of heat with a point on the high-temperature side free from a change of the amount of heat is defined as a baseline, an area surrounded by a line portion including the peak of the melting endothermic curve obtained by the DSC measurement using a differential scanning calorimeter (DSC-7, manufactured PerkinElmer Inc.) and the baseline is determined.

[Half-crystallization Time]

The half-crystallization time of the resin composition and the polypropylene-based resin (A1) was measured using FLASH DSC (manufactured by Mettler-Toledo K.K.) by the following method.

(1) A sample was heated and melted at 230°C for 2 minutes and then cooled to 25°C at a rate of 2,000°C/sec, thereby measuring a change in calorific value with time in an isothermal crystallization process at 25°C.
(2) When an integrated value of the calorific value from the start of isothermal crystallization until the completion of crystallization was defined as 100%, a time from the start of isothermal crystallization until the integrated value of the calorific value became 50% was defined as the half-crystallization time.

The half-crystallization time of the polypropylene-based resin (B-1) was measured with a differential scanning calorimeter (DSC) (a product name: "DSC-7", manufactured by PerkinElmer Inc.) in the following method.

(1) A change in calorific value with time in an isothermal crystallization process was measured by holding 10 mg of a sample at 25°C for 5 minutes, increasing the temperature to 220°C at a rate of 320°C/sec, holding for 5 minutes, cooling to 25°C at a rate of 320°C/sec, and then holding for 60 minutes.
(2) When an integrated value of the calorific value from the start of isothermal crystallization until the completion of crystallization was defined as 100%, a time from the start of isothermal crystallization until the integrated value of the calorific value became 50% was defined as the half-crystallization time.

[Melt Flow Rate (MFR)]

The melt flow rate (MFR) was measured under a condition at a temperature of 230°C and a load of 21.18 N in conformity with ISO 1133:1997.

[Measurement of Weight Average Molecular Weight (Mw); Molecular Weight Distribution (Mw/Mn); Value Obtained by Integrating dw/dlog(M) Values in the Range of $(5.5 \leq \log(M))$; Value Obtained by Integrating dw/dlog(M) Values in the Range of $(\log(M) \leq 4.5)$; Value Obtained by Integrating dw/dlog(M) Values over the Entire Range of log(M); and Range of log(M) Where Value of dw/dlog(M) Becomes Maximum]

The weight average molecular weight (Mw) and the number average molecular weight (Mn) were measured by the gel permeation chromatography (GPC) method to obtain the molecular weight distribution (Mw/Mn). The following device and condition were used for the measurement to obtain a weight average molecular weight and a number average molecular weight as expressed in terms of polystyrene. The molecular weight distribution (Mw/Mn) is a value calculated from these weight average molecular weight (Mw) and number average molecular weight (Mn).

In addition, the value obtained by integrating the dw/dlog(M) values in the range of $(5.5 \leq \log(M))$; the value obtained by integrating the dw/dlog(M) values in the range of $(\log(M) \leq 4.5)$; the value obtained by integrating the dw/dlog(M) values over the entire range of log(M); and the range of log(M) where value of dw/dlog(M) becomes maximum were determined by the following procedures.

First of all, as for a time curve (generally called an elution curve) of intensity distribution detected in a differential refractive index (RI) detector of the GPC device, an elution time was expressed in terms of a molecular weight by using a calibration curve obtained from a substance whose molecular weight is already known. Here, since the RI detection intensity is in proportion to the component concentration, an intensity area when the total area of the elution curve was defined as 100% was determined, and a concentration fraction at each elution time was determined. By successively accumulating the concentration fractions and plotting a logarithmic value (log(M)) of molecular weight on the abscissa and the accumulated value of the concentration fractions (w) on the ordinate, respectively, an integral molecular weight distribution curve was obtained.

Subsequently, by determining a differential value of the curve in the logarithmic value of each molecular weight (namely, a gradient of integral molecular weight curve) and plotting a logarithmic value (log(M)) of molecular weight on the abscissa and the aforementioned differential value (dw/dlog(M)) on the ordinate, respectively, a differential molecular weight distribution curve was obtained. From this integral molecular weight distribution curve, the integral molecular weight distribution dw/dlog(M) at a specified log(M) was read.

With respect to the polypropylene-based resin composition having a plurality of polypropylene-based resins blended therein, the integral molecular weight distribution curve was obtained by the same technique after measuring the polypropylene-based resin composition by the GPC method.

<GPC Measuring Device>

Column: "TOSO GMHHR-H(S)HT", manufactured by Tosoh Corporation
Detector: RI detector for liquid chromatogram, "WATERS 150C", manufactured by Waters Corporation

<Measurement Condition>

Solvent: 1,2,4-Trichlorobezene
Measurement temperature: 145°C
Flow rate: 1.0 mL/min
Sample concentration: 2.2 mg/mL
Injection amount: 160 μL
Calibration curve: Universal Calibration
Analysis program: HT-GPC (Ver. 1.0)

Polypropylene-based Resin (A1):

"NOVATEC SA03" (propylene homopolymer, manufactured by Japan Polypropylene Corporation)

Polypropylene-based Resin (A2):

"Lumicene M3766" (propylene homopolymer, manufactured by Total Petrochemical) Polypropylene-based Resin (A3):
"Prime Polypro F704" (propylene homopolymer, manufactured by Prime Polymer Co., Ltd.)

Polypropylene-based Resin (B-1-1):

"L-MODU S400" (homopolypropylene, manufactured by Idemitsu Kosan Co., Ltd.)

Polypropylene-based Resin (B-1-2):

"L-MODU S901" (homopolypropylene, manufactured by Idemitsu Kosan Co., Ltd.)

Wax (B-2-1)

"Moplen HP461Y" (peroxide-containing polypropylene, manufactured by LyondellBasell Industries N.V.)

Wax (B-2-2)

"Metocene MF650Y" (propylene homopolymer, manufactured by LyondellBasell Industries N.V.)
Various physical properties regarding the above (A1), (A2), (A3), (B-1-1), (B-1-2), (B-2-1), and (B-2-2) are shown in Table 1.

Table 1

|  | Unit | A1 | A2 | A3 | B-1-1 | B-1-2 | B-2-1 | B-2-2 |
|  |  | SA03 | M3766 | F704 | S400 | S901 | HP461Y | MF650Y |
|---|---|---|---|---|---|---|---|---|
| Proportion of (1) *1 | % | 15 | 14 | 26 | 9 | 5 | 5 | 4 |

(continued)

| | Unit | A1 | A2 | A3 | B-1-1 | B-1-2 | B-2-1 | B-2-2 |
|---|---|---|---|---|---|---|---|---|
| | | SA03 | M3766 | F704 | S400 | S901 | HP461Y | MF650Y |
| Proportion of (2) *2 | % | 10 | 7 | 12 | 33 | 9 | 26 | 33 |
| log(M) at which the dw/dlog(M) becomes maximum | - | 5.1 | 5.2 | 5.1 | 4.6 | 5.0 | 4.8 | 4.7 |
| Melting point (Tm-D) | °C | 163 | 152 | 161 | 80 | 80 | 165 | 158 |
| Melting endotherm ($\triangle$H-D) | J/g | 110 | 97 | 95 | 36 | 37 | - | - |
| MFR | g/10min | 30 | 24 | 7 | 2,600 | 50 | 1,300 | 1,800 |
| Weight average molecular weight (Mw) | - | 181,000 | 175,000 | 321,000 | 45,000 | 130,000 | - | - |
| Molecular weight distribution (Mw/Mn) | - | 3.3 | 2.3 | 6.6 | 2.0 | 2.0 | 4.2 | 2.3 |
| Half-crystallization time | sec/min | 0.04 sec | - | - | 21.5 min | 13.4 min | - | - |
| *1: Proportion of the value obtained by integrating the dw/dlog(M) values in the range of $(5.5 \leq \log(M))$ to the value obtained by integrating the dw/dlog(M) values over the entire range of log(M)  *2: Proportion of the value obtained by integrating the dw/dlog(M) values in the range of $(\log(M) \leq 4.5)$ to the value obtained by integrating the dw/dlog(M) values over the entire range of log(M) | | | | | | | | |

Example 1

(Production of Spunbonded Nonwoven Fabric)

90% by mass of the polypropylene-based resin (A1), 5% by mass of the polypropylene-based resin (B-1-1), and 5% by mass of the wax (B-2-1) were mixed to prepare a resin composition 1. The resin composition 1 had an MFR of 45 g/10 min and a half-crystallization time at 25°C of 0.06 seconds.

The resin composition 1 was melt extruded with a single-screw extruder at a resin temperature of 200°C, and the molten resin was discharged through a nozzle having a nozzle diameter of 0.60 mm (number of holes: 1,795 holes) at a single hole discharge rate of 0.6 g/min per hole, thereby performing spinning. The fiber produced through spinning was sucked under a predetermined ejector pressure while being cooled with air at 12.5°C and at a rate of 0.6 m/sec, thereby collecting the fiber onto a net surface moving at a line speed of 120 m/min. The fiber bundles collected on the net surface were embossed with an embossing roll under a linear pressure of 40 N/mm and wound up with a take-up roll, thereby producing a spunbonded nonwoven fabric. A maximum ejector pressure under which the fiber breakage was not caused was 4.0 kgf/cm$^2$.

Comparative Example 1

A spunbonded nonwoven fabric was produced in the same manner as in Example 1, except that in Example 1, the resin composition 1 was changed to the polypropylene-based resin (A1). A maximum ejector pressure under which the thread breakage was not caused was 2.0 kgf/cm$^2$.

From the results of Example 1 and Comparative Example 1, it is noted that the resin composition of Example 1 is excellent in spinning stability as compared with that in Comparative Example 1.

Example 2

A spunbonded nonwoven fabric was produced in the same manner as in Example 1, except that in Example 1, the discharge rate was changed to 0.4 g/min per hole, and the line speed was changed to 80 m/min. A maximum ejector pressure under which the thread breakage was not caused was 3.0 kgf/cm$^2$.

Comparative Example 2

A spunbonded nonwoven fabric was produced in the same manner as in Example 2, except that in Example 2, the resin composition 1 was changed to the polypropylene-based resin (A1). A maximum ejector pressure under which the thread breakage was not caused was 1.0 kgf/cm$^2$.

From the results of Example 2 and Comparative Example 2, it is noted that the resin composition of Example 2 is excellent in spinning stability as compared with that in Comparative Example 2.

Example 3

<Production of Side-by-Side Type Fiber>

80% by mass of the polypropylene-based resin (A1), 10% by mass of the polypropylene-based resin (B-1-1), and 10% by mass of the wax (B-2-1) were mixed to prepare a resin composition 3. The resin composition 3 had an MFR of 68 g/10 min and a half-crystallization time at 25°C of 0.07 seconds.

The formation of a side-by-side type fiber was performed using a conjugate melt fiber spinning machine, bi-component spinning apparatus having two extruders. The polypropylene-based resin (A1) as the first component and the resin composition 3 as the second component were each separately melt extruded with a single-screw extruder at a resin temperature of 240°C, and the molten resin was discharged and spun from a nozzle having a nozzle diameter of 0.60 mm (number of holes: 1,795 holes) at a single hole discharge rate of 0.35 g/min per hole n a mass ratio of the first component (side A) to the second component (side B) of 30/70, to obtain a side-by-side type fiber. A maximum ejector pressure under which the thread breakage was not caused was 2.0 kgf/cm$^2$.

(Production of Spunbonded Nonwoven Fabric Constituted of Side-by-Side Type Fiber)

While the resulting side-by-side type fiber was cooled with air at 12.5°C and at a rate of 0.6 m/sec, the fiber was sucked under an ejector pressure of 2.0 kgf/cm$^2$, thereby collecting the fiber onto a net surface moving at a line speed of 52 m/min. The fiber bundles collected on the net surface were embossed with an embossing roll under a linear pressure of 40 N/mm and wound up with a take-up roll, thereby producing a spunbonded nonwoven fabric. The resulting nonwoven fabric had a fineness of 1.27 deniers and a number of crimps of 26 per 25 mm.

Example 4

80% by mass of the polypropylene-based resin (A1), 5% by mass of the polypropylene-based resin (B-1-1), and 15% by mass of the wax (B-2-1) were mixed to prepare a resin composition 4. The resin composition 4 had an MFR of 65 g/10 min and a half-crystallization time at 25°C of 0.06 seconds.

A side-by-side type fiber and a spunbonded nonwoven fabric were produced in the same manner as in Example 3, except that in Example 3, the resin composition 3 was changed to the resin composition 4. A maximum ejector pressure under which the thread breakage was not caused was 2.0 kgf/cm$^2$. The resulting nonwoven fabric had a fineness of 1.44 deniers and a number of crimps of 26 per 25 mm.

Example 5

60% by mass of the polypropylene-based resin (A1), 20% by mass of the polypropylene-based resin (B-1-1), and 20% by mass of the wax (B-2-2) were mixed to prepare a resin composition 5. The resin composition 5 had an MFR of 166 g/10 min and a half-crystallization time at 25°C of 0.09 seconds.

A side-by-side type fiber and a spunbonded nonwoven fabric were produced in the same manner as in Example 3, except that in Example 3, the resin composition 3 was changed to the resin composition 5, and spinning was performed under the conditions shown in Table 3. A maximum ejector pressure under which the thread breakage was not caused was 5.0 kgf/cm$^2$. A fineness and a number of crimps of the resulting nonwoven fabric are shown in Table 3.

Reference Example 1

80% by mass of the polypropylene-based resin (A1), 5% by mass of the polypropylene-based resin (B-1-1), and 15% by mass of the wax (B-2-2) were mixed to prepare a resin composition 6. The resin composition 6 had an MFR of 69 g/10 min and a half-crystallization time at 25°C of 0.05 seconds.

A side-by-side type fiber and a spunbonded nonwoven fabric were produced in the same manner as in Example 3, except that in Example 3, the resin composition 3 was changed to the resin composition 6, and spinning was performed under the conditions shown in Table 3. A maximum ejector pressure under which the thread breakage was not caused was 3.5 kgf/cm$^2$. The resulting nonwoven fabric had a fineness of 1.1 deniers and a number of crimps of 18 per 25 mm.

Example 6

80% by mass of the polypropylene-based resin (A1), 10% by mass of the polypropylene-based resin (B-1-1), and 10% by mass of the wax (B-2-2) were mixed to prepare a resin composition 7. The resin composition 7 had an MFR of 71 g/10 min and a half-crystallization time at 25°C of 0.06 seconds.
A side-by-side type fiber and a spunbonded nonwoven fabric were produced in the same manner as in Example 3, except that in Example 3, the resin composition 3 was changed to the resin composition 7, and spinning was performed under the conditions shown in Table 3. A maximum ejector pressure under which the thread breakage was not caused was 3.5 kgf/cm$^2$. The resulting nonwoven fabric had a fineness of 1.1 deniers and a number of crimps of 18 per 25 mm.

Example 7

80% by mass of the polypropylene-based resin (A1), 15% by mass of the polypropylene-based resin (B-1-1), and 5% by mass of the wax (B-2-2) were mixed to prepare a resin composition 8. The resin composition 8 had an MFR of 72 g/10 min and a half-crystallization time at 25°C of 0.07 seconds.
A side-by-side type fiber and a spunbonded nonwoven fabric were produced in the same manner as in Example 3, except that in Example 3, the resin composition 3 was changed to the resin composition 8, and spinning was performed under the conditions shown in Table 3. A maximum ejector pressure under which the thread breakage was not caused was 3.0 kgf/cm$^2$. The resulting nonwoven fabric had a fineness of 1.2 deniers and a number of crimps of 18 per 25 mm.

Comparative Example 3

80% by mass of the polypropylene-based resin (A1) and 20% by mass of the polypropylene-based resin (A3) were mixed to prepare a resin composition 9. The resin composition 9 had an MFR of 22 g/10 min and a half-crystallization time at 25°C of 0.05 seconds.
The experiment was performed in the same manner as in Example 3, except that in Example 3, the polypropylene-based resin (A1) used for the first component was changed to the resin composition 9, the resin composition 3 used for the second component was changed to the polypropylene-based resin (A1), and the spinning conditions were changed as shown in Table 4. As a result, the spinning could not be performed due to occurrence of fiber breakage.

Reference Example 2

80% by mass of the polypropylene-based resin (A1) and 20% by mass of the polypropylene-based resin (A2) were mixed to prepare a resin composition 10. In addition, 80% by mass of the polypropylene-based resin (A1) and 20% by mass of the polypropylene-based resin (B-1-1) were mixed to prepare a resin composition 11. The MFR and the half-crystallization time at 25°C of each of the resin compositions 10 and 11 were those as shown in Table 4.
A side-by-side type fiber and a spunbonded nonwoven fabric were produced in the same manner as in Example 3, except that in Example 3, the polypropylene-based resin (A1) used for the first component was changed to the resin composition 10, the resin composition 3 used for the second component was changed to the resin composition 11, and the spinning was performed under the conditions shown in Table 4. A maximum ejector pressure under which the thread breakage was not caused was 3.0 kgf/cm$^2$. The resulting nonwoven fabric had a fineness of 1.11 deniers and a number of crimps of 14 per 25 mm.

Example 8

95% by mass of the polypropylene-based resin (A1) and 5% by mass of the polypropylene-based resin (B-1-2) were mixed to prepare a resin composition 12. The resin composition 12 had an MFR of 31 g/10 min and a half-crystallization time at 25°C of 0.05 seconds.
A side-by-side type fiber and a spunbonded nonwoven fabric were produced in the same manner as in Example 3, except that in Example 3, the polypropylene-based resin (A1) used for the first component was changed to the resin composition 12, the resin composition 3 used for the second component was changed to the resin composition 8, and the spinning was performed under the conditions shown in Table 4. A maximum ejector pressure under which the thread breakage was not caused was 4.0 kgf/cm$^2$. The resulting nonwoven fabric had a fineness of 1.0 denier and a number of crimps of 18 per 25 mm.

Example 9

95% by mass of the polypropylene-based resin (A1) and 5% by mass of the polypropylene-based resin (B-1-1) were mixed to prepare a resin composition 13. The resin composition 13 had an MFR of 38 g/10 min and a half-crystallization time at 25°C of 0.05 seconds.

A side-by-side type fiber and a spunbonded nonwoven fabric were produced in the same manner as in Example 3, except that in Example 3, the polypropylene-based resin (A1) used for the first component was changed to the resin composition 13, the resin composition 3 used for the second component was changed to the resin composition 5, and the spinning was performed under the conditions shown in Table 4. A maximum ejector pressure under which the thread breakage was not caused was 4.0 kgf/cm$^2$. The resulting nonwoven fabric had a fineness of 1.2 deniers and a number of crimps of 37 per 25 mm.

Reference Example 3

A side-by-side type fiber and a spunbonded nonwoven fabric were produced in the same manner as in Example 3, except that in Example 3, the polypropylene-based resin (A1) used for the first component was changed to the resin composition 12, the resin composition 3 used for the second component was changed to the resin composition 11, and the spinning was performed under the conditions shown in Table 4. A maximum ejector pressure under which the thread breakage was not caused was 4.0 kgf/cm$^2$. The resulting nonwoven fabric had a fineness of 0.9 deniers and a number of crimps of 21 per 25 mm.

Reference Example 4

A side-by-side type fiber and a spunbonded nonwoven fabric were produced in the same manner as in Example 3, except that in Example 3, the polypropylene-based resin (A1) used for the first component was changed to the resin composition 13, the resin composition 3 used for the second component was changed to the resin composition 11, and the spinning was performed under the conditions shown in Table 4. A maximum ejector pressure under which the thread breakage was not caused was 3.5 kgf/cm$^2$. The resulting nonwoven fabric had a fineness of 1.3 deniers and a number of crimps of 16 per 25 mm.

The fineness and the number of crimps of the nonwoven fabric obtained in each of the Examples, Comparative Examples, and Reference Examples were measured by the following method.

(Measurement of Fineness)

Fibers in the nonwoven fabric were observed with a polarizing microscope, an average value d (unit: m) of diameter of randomly selected 100 fibers was measured, and the fineness of the nonwoven fabric sample was calculated from a density of the resin (p = 900,000 g/m$^3$) according to the following expression.

$$\text{Fineness (denier)} = \rho \times \pi \times (d/2)^2 \times 9{,}000$$

(Evaluation of Number of Crimps)

The number of crimps was measured using a crimp elastic modulus measuring device in conformity with JIS L1015:2010. One fiber was extracted from a cotton-like sample before embossing in such a manner that a tension was not applied to the fiber; a length when an initial load of 0.18 mN/tex was applied to 25 mm of the sample was measured; and the number of crimps at that time was counted, thereby determining the number of crimps in a length of 25 mm. It is meant that as the number of crimps is large, the fiber·nonwoven fabric is high in the crimping properties.

From the results of Examples 1 to 9, it is noted that the polypropylene-based resin composition of the present invention is able to stably provide a crimped fiber and a nonwoven fabric.

The production conditions, the measurement results, and the evaluation results of the aforementioned Examples 1 to 9, Comparative Examples 1 to 3, and Reference Examples 1 to 4 are shown in Tables 2 to 4.

Table 2

| | | Unit | Example 1 | Comparative Example 1 | Example 2 | Comparative Example 2 |
|---|---|---|---|---|---|---|
| Polypropylene-based resin (A) | (A1): SA03 | mass% | 90 | 100 | 90 | 100 |
| Polypropylene-based wax (B-2) | (B-1-1): S400 | mass% | 5 | 0 | 5 | 0 |
| | (B-2-1): HP461Y | mass% | 5 | 0 | 5 | 0 |
| Half-crystallization time | | sec | 0.06 | 0.04 | 0.06 | 0.04 |
| MFR | | g/10 min | 45 | 30 | 45 | 30 |
| Proportion of (1) *1 | | % | 14 | 15 | 14 | 15 |
| Proportion of (2) *2 | | % | 12 | 10 | 12 | 10 |
| log(M) atwhich the dw/dlog(M) becomes maximum | | - | 5.1 | 5.1 | 5.1 | 5.1 |
| Content of resin composition of the present invention in fiber | | mass% | 100 | 100 | 100 | 100 |
| Content of resin composition of the present invention in nonwoven fabric | | mass% | 100 | 100 | 100 | 100 |
| Resin temperature | | °C | 200 | 200 | 200 | 200 |
| Single hole discharge rate | | g/min/hole | 0.6 | 0.6 | 0.4 | 0.4 |
| Speed per single hole | | kg/h | 65 | 65 | 43 | 43 |
| Ejector pressure | | kgf/cm$^2$ | 4.0 | 2.0 | 3.0 | 1.0 |
| Nip pressure (line pressure) | | N/mm | 40 | 40 | 40 | 40 |
| Line speed | | m/min | - | - | - | - |
| Basis weight | | gsm | - | - | - | - |
| Fineness (fiber diameter) | | denier | 1.50 | 2.04 | 1.22 | 2.41 |
| Number of crimps | | per 25 mm | - | - | - | - |

*1: Proportion of the value obtained by integrating the dw/dlog(M) values in the range of $(5.5 \leq \log(M))$ to the value obtained by integrating the dw/dlog(M) values over the entire range of log(M) *2: Proportion of the value obtained by integrating the dw/dlog(M) values in the range of $(\log(M) \leq 4.5)$ to the value obtained by integrating the dw/dlog(M) values over the entire range of log(M)

Table 3

| | | | Unit | Example 3 | Example 4 | Example 5 | Reference Example 1 | Example 6 | Example 7 |
|---|---|---|---|---|---|---|---|---|---|
| First component | Polypropylene-based resin (A) | (A1): SA03 | mass% | 100 | 100 | 100 | 100 | 100 | 100 |
| | | (A2): M3766 | mass% | 0 | 0 | 0 | 0 | 0 | 0 |
| | | (A3): F704 | mass% | 0 | 0 | 0 | 0 | 0 | 0 |
| | Polypropylene-based resin (B-1) | (B-1-1): S400 | mass% | 0 | 0 | 0 | 0 | 0 | 0 |
| | | (B-1-2): S901 | mass% | 0 | 0 | 0 | 0 | 0 | 0 |
| | Wax (B-2) | (B-2-1): HP461Y | mass% | 0 | 0 | 0 | 0 | 0 | 0 |
| | Half-crystallization time | | sec | 0.04 | 0.04 | 0.04 | 0.04 | 0.04 | 0.04 |
| | MFR | | g/10 min | 30 | 30 | 30 | 30 | 30 | 30 |
| | Proportion of (1) *1 | | % | 15 | 15 | 15 | 15 | 15 | 15 |
| | Proportion of (2) *2 | | % | 10 | 10 | 10 | 10 | 10 | 10 |
| | log(M) at which the dw/dlog(M) becomes maximum | | - | 5.1 | 5.1 | 5.1 | 5.1 | 5.1 | 5.1 |
| Second component | Polypropylene-based resin (A) | (A1): SA03 | mass% | 80 | 80 | 60 | 80 | 80 | 80 |
| | Polypropylene-based resin (B-1) | (B-1-1): S400 | mass% | 10 | 5 | 20 | 5 | 10 | 15 |
| | Wax (B-2) | (B-2-1): HP461Y | mass% | 10 | 15 | 0 | 0 | 0 | 0 |
| | | (B-2-2): MF650Y | mass% | 0 | 0 | 20 | 15 | 10 | 5 |
| | Half-crystallization time | | sec | 0.07 | 0.06 | 0.09 | 0.05 | 0.06 | 0.07 |
| | MFR | | g/10 min | 68 | 65 | 166 | 69 | 71 | 72 |
| | Proportion of (1) *1 | | % | 13 | 13 | 9 | 12 | 12 | 12 |
| | Proportion of (2) *2 | | % | 14 | 14 | 20 | 15 | 15 | 15 |
| | log(M) at which the dw/dlog(M) becomes maximum | | - | 5 | 5 | 4.9 | 3 | 3.1 | 3.1 |
| Content of resin composition of the present invention in fiber | | | mass% | 70 | 70 | 70 | 70 | 70 | 70 |
| Content of resin composition of the present invention in nonwoven fabric | | | mass% | 70 | 70 | 70 | 70 | 70 | 70 |
| (First component)/(second component) mass ratio | | | - | 30/70 | 30/70 | 30/70 | 30/70 | 30/70 | 30/70 |
| Resin temperature | | | °C | 240 | 240 | 260 | 230 | 230 | 230 |
| Single hole discharge rate | | | g/min/hole | 0.35 | 0.35 | 0.4 | 0.4 | 0.4 | 0.4 |
| Speed per single hole | | | kg/h | 38 | 38 | 43 | 43 | 43 | 43 |
| Ejector pressure | | | kgf/cm$^2$ | 2.0 | 2.0 | 5.0 | 3.5 | 3.5 | 3.0 |
| Nip pressure (line pressure) | | | N/mm | 40 | 40 | 40 | - | - | - |
| Line speed | | | m/min | 52 | 52 | 60 | - | - | - |
| Basis weight | | | gsm | 20 | 20 | 20 | - | - | - |
| Fineness (fiber diameter) | | | denier | 1.27 | 1.44 | 1.00 | 1.1 | 1.1 | 1.2 |
| Number of crimps | | | per 25 mm | 26 | 26 | 43 | 18 | 18 | 18 |

*1: Proportion of the value obtained by integrating the dw/dlog(M) values in the range of (5.5 ≤ log(M)) to the value obtained by integrating the dw/dlog(M) values over the entire range of log(M) *2: Proportion of the value obtained by integrating the dw/dlog(M) values in the range of (log(M) ≤ 4.5) to the value obtained by integrating the dw/dlog(M) values over the entire range of log(M)

Table 4

| | | | Unit | Comparative Example 3 | Reference Example 2 | Example 8 | Example 9 | Reference Example 3 | Reference Example 4 |
|---|---|---|---|---|---|---|---|---|---|
| First component | Polypropylene-based resin (A) | (A1): SA03 | mass% | 80 | 80 | 95 | 95 | 95 | 95 |
| | | (A2): M3766 | mass% | 0 | 20 | 0 | 0 | 0 | 0 |
| | | (A3): F704 | mass% | 20 | 0 | 0 | 0 | 0 | 0 |
| | Polypropylene-based resin (B-1) | (B-1-1): S400 | mass% | 0 | 0 | 0 | 5 | 0 | 5 |
| | | (B-1-2): S901 | mass% | 0 | 0 | 5 | 0 | 5 | 0 |
| | Wax (B-2) | (B-2-1): HP461Y | mass% | 0 | 0 | 0 | 0 | 0 | 0 |
| | Half-crystallization time | | sec | 0.05 | 0.04 | 0.05 | 0.05 | 0.05 | 0.05 |
| | MFR | | g/10 min | 22 | 28 | 31 | 38 | 31 | 38 |
| | Proportion of (1) *1 | | % | 17 | 15 | 14 | 15 | 14 | 15 |
| | Proportion of (2) *2 | | % | 10 | 9 | 11 | 10 | 11 | 10 |
| | log(M) at which the dw/dlog(M) becomes maximum | | - | 5 | 5.1 | 3.3 | 3.3 | 3.3 | 3.3 |
| Second component | Polypropylene-based resin (A) | (A1): SA03 | mass% | 100 | 80 | 80 | 60 | 80 | 80 |
| | Polypropylene-based resin (B-1) | (B-1-1): S400 | mass% | 0 | 20 | 15 | 20 | 20 | 20 |
| | Wax (B-2) | (B-2-1): HP461Y | mass% | 0 | 0 | 0 | 0 | 0 | 0 |
| | | (B-2-2): MF650Y | mass% | 0 | 0 | 5 | 20 | 0 | 0 |
| | Half-crystallization time | | sec | 0.04 | 0.09 | 0.07 | 0.09 | 0.09 | 0.09 |
| | MFR | | g/10 min | 30 | 73 | 72 | 166 | 73 | 73 |
| | Proportion of (1) *1 | | % | 15 | 12 | 12 | 9 | 12 | 12 |
| | Proportion of (2) *2 | | % | 10 | 15 | 15 | 20 | 15 | 15 |
| | log(M) at which the dw/dlog(M) becomes maximum | | - | 5 | 4.9 | 3.1 | 4.9 | 4.9 | 4.9 |
| Content of resin composition of the present invention in fiber | | | mass% | 70 | 70 | 70 | 70 | 70 | 70 |
| Content of resin composition of the present invention in nonwoven fabric | | | mass% | 70 | 70 | 70 | 70 | 70 | 70 |
| (First component)/(second component) mass ratio | | | - | 30/70 | 30/70 | 30/70 | 30/70 | 30/70 | 30/70 |
| Resin temperature | | | °C | 230 | 230 | 230 | 230 | 230 | 230 |
| Single hole discharge rate | | | g/min/hole | 0.4 | 0.4 | 0.4 | 0.4 | 0.4 | 0.4 |
| Speed per single hole | | | kg/h | 43 | 43 | 43 | 43 | 43 | 43 |
| Ejector pressure | | | kgf/cm$^2$ | Spinning impossible | 3.0 | 4.0 | 4.0 | 4.0 | 3.5 |
| Nip pressure (line pressure) | | | N/mm | - | 40 | - | - | - | - |
| Line speed | | | m/min | - | 60 | - | - | - | - |
| Basis weight | | | gsm | - | 20 | - | - | - | - |
| Fineness (fiber diameter) | | | denier | - | 1.11 | 1.0 | 1.2 | 0.9 | 1.3 |
| Number of crimps | | | per 25 mm | - | 14 | 18 | 37 | 21 | 16 |

*1: Proportion of the value obtained by integrating the dw/dlog(M) values in the range of $(5.5 \leq \log(M))$ to the value obtained by integrating the dw/dlog(M) values over the entire range of log(M) *2: Proportion of the value obtained by integrating the dw/dlog(M) values in the range of $(\log(M) \leq 4.5)$ to the value obtained by integrating the dw/dlog(M) values over the entire range of log(M)

## Claims

1. A polypropylene-based resin composition satisfying the following requirements (1) and (2) in a differential molecular weight distribution curve which is obtained from measurement by the gel permeation chromatography using polystyrene as a conversion standard, and in which the abscissa represents a logarithmic value log(M) of a molecular weight M, and the ordinate represents a dw/dlog(M) value obtained by differentiating a concentration fraction w by the logarithmic value log(M) of the molecular weight:

(1) In the differential molecular weight distribution curve, a value obtained by integrating the dw/dlog(M) values in the range of $(5.5 \leq \log(M))$ is 25% or less relative to a value obtained by integrating the dw/dlog(M) values over the entire range of log(M); and
(2) In the differential molecular weight distribution curve, a value obtained by integrating the dw/dlog(M) values in the range of $(\log(M) \leq 4.5)$ is more than 10% relative to a value obtained by integrating the dw/dlog(M) values over the entire range of log(M).

**2.** The polypropylene-based resin composition according to claim 1, comprising a polypropylene-based resin (A) satisfying the following requirement (3) and a polypropylene-based resin (B) satisfying the following requirement (4) in a differential molecular weight distribution curve which is obtained from measurement by the gel permeation chromatography using polystyrene as a conversion standard, and in which the abscissa represents a logarithmic value log(M) of a molecular weight M, and the ordinate represents a dw/dlog(M) value obtained by differentiating a concentration fraction w by the logarithmic value log(M) of the molecular weight:

(3) In the differential molecular weight distribution curve, a value obtained by integrating the dw/dlog(M) values in the range of (5.5 $\leq$ log(M)) is 25% or less relative to a value obtained by integrating the dw/dlog(M) values over the entire range of log(M); and
(4) In the differential molecular weight distribution curve, a value obtained by integrating the dw/dlog(M) values in the range of (log(M) $\leq$ 4.5) is more than 10% relative to a value obtained by integrating the dw/dlog(M) values over the entire range of log(M).

**3.** A polypropylene-based resin composition having a melt flow rate (MFR) of 10 g/10 min or more and 500 g/10 min or less and a half-crystallization time of more than 0.05 seconds.

**4.** The polypropylene-based resin composition according to claim 2, comprising 40% by mass or more and 99% by mass or less of the polypropylene-based resin (A) and 1% by mass or more and 60% by mass or less of the polypropylene-based resin (B) based on 100% by mass of a sum total of the polypropylene-based resin (A) and the polypropylene-based resin (B).

**5.** The polypropylene-based resin composition according to claim 2 or 4, wherein the polypropylene-based resin (B) comprises at least one selected from the group consisting of a wax (B-2) and a polypropylene-based resin (B-1) having a melting endotherm ($\Delta$H-D) of 0 J/g or more and 80 J/g or less.

**6.** The polypropylene-based resin composition according to claim 5, comprising
40% by mass or more and 99% by mass or less of the polypropylene-based resin (A),
0.5% by mass or more and 59.5% by mass of the polypropylene-based resin (B-1), and
0.5% by mass or more and 59.5% by mass of the wax (B-2),
based on 100% by mass of a sum total of the polypropylene-based resin (A), the polypropylene-based resin (B-1), and the wax (B-2).

**7.** The polypropylene-based resin composition according to claim 2 or any one of claims 4 to 6, wherein a melt flow rate (MFR) of the polypropylene-based resin (A) is 5 g/10 min or more and 100 g/10 min or less.

**8.** The polypropylene-based resin composition according to any one of claims 5 to 7, wherein a molecular weight distribution (Mw/Mn) of at least one selected from the group consisting of the polypropylene-based resin (B-1) and the wax (B-2) is 3.0 or less.

**9.** The polypropylene-based resin composition any one of claims 5 to 8, wherein a melt flow rate (MFR) of the polypropylene-based resin (B-1) is 1 g/10 min or more and 5,000 g/10 min or less.

**10.** The polypropylene-based resin composition according to any one of claims 5 to 9, wherein a half-crystallization time of the polypropylene-based resin (B-1) is 3 minutes or more.

**11.** A fiber comprising the polypropylene-based resin composition according to any one of claims 1 to 10.

**12.** The fiber according to claim 11, comprising the polypropylene-based resin (A) in a first component and the polypropylene-based resin composition according to any one of claims 1 to 10 in a second component.

**13.** The fiber according to claim 12, wherein a half-crystallization time is more than 0.05 seconds.

**14.** A nonwoven fabric comprising the fiber according to any one of claims 11 to 13.

**15.** A polypropylene-based resin composition comprising a polypropylene-based resin (A) having a melting point (Tm-D) of higher than 120°C, a polypropylene-based resin (B-1) having a melting endotherm ($\Delta$H-D) of 0 J/g or more and 80 J/g or less, and a wax (B-2), the polypropylene-based resin composition comprising 40% by mass or more and 99% by mass or less of the polypropylene-based resin (A), 0.5% by mass or more and 59.5% by mass of the polypropylene-based resin (B-1), and 0.5% by mass or more and 59.5% by mass of the wax (B-2) based on 100% by mass of a sum total of the polypropylene-based resin (A), the polypropylene-based resin (B-1), and the wax (B-2).

## INTERNATIONAL SEARCH REPORT

International application No.

PCT/JP2018/027498

A. CLASSIFICATION OF SUBJECT MATTER
Int.Cl. C08L23/10(2006.01)i, C08L23/02(2006.01)i, D01F1/10(2006.01)i,
D01F6/06(2006.01)i, D01F8/06(2006.01)i, D04H3/007(2012.01)i,
D04H3/14(2012.01)i, D04H3/147(2012.01)i
According to International Patent Classification (IPC) or to both national classification and IPC

B. FIELDS SEARCHED

Minimum documentation searched (classification system followed by classification symbols)
Int.Cl. C08L23/10, C08L23/02, D01F1/10, D01F6/06, D01F8/06, D04H3/007, D04H3/14,
D04H3/147

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2011/030893 A1 (IDEMITSU KOSAN CO., LTD.) 17 March 2011, claims, examples & US 2012/0208422 A1, claims, examples & EP 2479331 A1 & EP 2813611 A1 | 1–5, 7–14<br>6, 15 |
| X<br>A | WO 2016/002950 A1 (IDEMITSU KOSAN CO., LTD.) 07 January 2016, claims, paragraph [0032], examples & US 2017/0145198 A1, claims, paragraph [0090], examples & EP 3165656 A1 & CN 106661792 A | 1–5, 7–14<br>6, 15 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 August 2018 (27.08.2018) | Date of mailing of the international search report<br>11 September 2018 (11.09.2018) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/027498 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2016-40428 A (IDEMITSU KOSAN CO., LTD.) 24 March 2016, claims, examples & WO 2015/141750 A1 & EP 3121314 A1, claims, examples & CN 106062261 A | 1-15 |
| A | JP 2014-177729 A (IDEMITSU KOSAN CO., LTD.) 25 September 2014, claims, examples & US 2016/0032504 A1, claims, examples & WO 2014/142323 A1 & EP 2975167 A1 & CN 105121729 A | 1-15 |
| A | WO 2012/105567 A1 (IDEMITSU KOSAN CO., LTD.) 09 August 2012, claims, examples & US 2013/0309931 A1, claims, examples & EP 2671992 A1 | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011030893 A
- US 3671379 A